# EUROPÄISCHE PATENTSCHRIFT

(11) **EP 2 443 379 B1**
(45) Veröffentlichungstag und Bekanntmachung des Hinweises auf die Patenterteilung: **09.04.2014**
(21) Anmeldenummer: 10723948.5
(22) Anmeldetag: 14.06.2010
(51) Int. Cl.: F17C 1/16, F17C 13/08

(54) **SPEICHER ZUR AUFNAHME EINES FLUIDS**
RESERVOIR FOR RECEIVING A FLUID
RÉSERVOIR DESTINÉ À RECEVOIR UN FLUIDE

(30) Priorität: 16.06.2009 DE 102009025386
(43) Veröffentlichungstag der Anmeldung: 25.04.2012
(73) Patentinhaber: Rehau AG & Co, 95111 Rehau (DE)
(72) Erfinder: GRIEBEL, Dragan, 95173 Schönwald (DE); BÖHM, Volker, 95234 Sparneck (DE); OELSCHLEGEL, Alexander, 95176 Konradsreuth (DE); HONHEISER, Norbert, 95152 Selbitz (DE)
(86) Internationale Anmeldenummer: PCT/EP2010/003561
(87) Internationale Veröffentlichungsnummer: WO 2010/145794

(56) Entgegenhaltungen:
- EP-A2- 0 353 850
- EP-A2- 1 156 266
- WO-A1-00/66939
- WO-A2-03/069217
- DE-A1- 10 163 029
- US-A- 3 280 567
- US-A- 3 874 544
- US-A- 4 785 956
- US-A- 5 287 987
- US-A- 5 429 845
- US-A1- 2005 260 372

## Beschreibung

Die Erfindung betrifft einen Speicher zur Aufnahme eines Fluids, insbesondere von Wasserstoff unter gegenüber der Umgebung erhöhtem Druck von bis zu 1500 bar, der einen Hohlkörper aufweist, welcher von einer Wandung begrenzt ist, wobei die Wandung einen mehrschichtigen Aufbau und eine Einrichtung zur Zu- bzw. Abführung des Fluids zum Hohlkörper aufweist, eine äußere Schicht der Wandung als Armierungsschicht ausgebildet ist und die Armierungsschicht aus Filamenten oder Fäden gewickelt und/oder geflochten ist.

Weiterhin betrifft die Erfindung ein Verfahren zur Herstellung eines solchen Speichers. Schließlich betrifft die Erfindung ein Fluid-Versorgungssystem mit wenigstens einem solchen Speicher.

Speicher zur Aufnahme von gasförmigen oder flüssigen Medien unter Druck, die einen Hohlkörper mit einer mehrschichtigen Wandung aufweisen, sind aus dem Stand der Technik bekannt. Derartige Speicher werden beispielsweise zur Versorgung der Verbrennungskraftmaschine in Kraftfahrzeugen eingesetzt, wobei der Speicher gasförmige oder flüssige brennbare Stoffe enthält und bereitstellt. Insbesondere Gase werden hierbei unter sehr hohen Drücken, die durchaus bis zu 1500 bar betragen können, in derartigen Speichern aufgenommen.

Bekannt ist aus dem Stand der Technik weiterhin, dass die Wandung des Speichers aus einer inneren Schicht besteht, die beispielsweise aus Metall oder aus einem Polymermaterial besteht, und eine äußere Schicht vorhanden ist, die eine Armierungsschicht darstellt. Die WO 00/66939 A1 offenbart einen blasgeformten Speicher gemäß dem Oberbegriff des Anspruchs 1 mit einer inneren Schicht aus Polyethylen.

Nachteilig ist bei diesem bekannten Stand der Technik, dass beim Betankungsvorgang, bei dem beispielsweise ein Gas unter hohem Druck und in großer Geschwindigkeit in den Speicher eingebracht wird, Wärme entsteht, die gegebenenfalls die innere Wandung des Speichers, soweit diese aus einem Polymermaterial besteht, schädigen kann.

Ausgehend von diesem Stand der Technik liegt der Erfindung die Aufgabe zugrunde, einen Speicher zur Aufnahme eines Fluids zur Verfügung zu stellen, der es gestattet, schnelle Betankungsvorgänge vornehmen zu können, ohne eine Schädigung durch dabei entstehende Wärme zu erfahren.

Eine weitere Aufgabe der Erfindung ist es, ein Herstellverfahren für einen solchen Speicher anzugeben; schließlich ist es noch Aufgabe der Erfindung, ein Fluid-Versorgungssystem mit wenigstens einem solchen Speicher zu nennen.

Die Aufgabe wird dadurch gelöst, dass ein Speicher zur Aufnahme eines Fluids, insbesondere unter gegenüber der Umgebung erhöhtem Druck, bereitgestellt wird, wobei der Speicher einen Hohlkörper aufweist, welcher von einer Wandung begrenzt ist.
Die Wandung weist einen mehrschichtigen Aufbau auf. Darin ist eine Einrichtung zur Zu- bzw. Abführung des Fluids zum Hohlkörper vorgesehen. Der Speicher zur Aufnahme des Fluids zeichnet sich dadurch aus, dass die innere Schicht der Wandung vernetztes Polyethylen enthält.

Mit der erfindungsgemäßen Auswahl von vernetztem Polyethylen für die innere Schicht der Wandung, die auch als "Liner" bezeichnet wird, wird ein Speicher zur Verfügung gestellt, der es gestattet, schnelle Betankungsvorgänge vorzunehmen, wobei die dabei entstehende Wärme zu keiner schädigenden Einwirkung auf den Liner führt. Insbesondere findet dabei keine thermische Deformation des Liners statt, das Material des Liners kann nicht unter der Einwirkung der Wärme "wegfließen".

Die innere Schicht des Speichers, der Liner, wird in einem Blasverfahren hergestellt. Hierzu wird in einem an sich bekannten Verfahren ein Schlauch extrudiert, der dann mittels eines Formwerkzeuges umschlossen und durch Einblasen eines Gases geformt wird.
Der Liner weist bevorzugt eine Gestalt auf, die einen langestreckten zylindrischen Abschnitt und zwei diesen begrenzende in etwa halbkugelförmige sogenannte Polkappen umfasst.

Im Rahmen der Erfindung kann vorteilhaft vorgesehen sein, dass das Polyethylen des Liners peroxidisch oder silanisch oder durch Einwirkung von Strahlungsenergie vernetzt ist.

Dabei ist besonders bevorzugt die peroxidische Vernetzung von Polyethylen, bei der sogenanntes PE-Xa gebildet wird, wobei die Vernetzung des Polyethylens unter erhöhter Temperatur durch radikalbildende Peroxide stattfindet.

Bei der Vernetzung von Polyethylen werden chemische Verbindungen zwischen benachbarten Polymerketten hergestellt, so dass ein hochzähes und insbesondere hochtemperaturstabiles Polymermaterial entsteht, das für den oben beschriebenen Einsatzzweck hervorragend geeignet ist.

Der Vernetzungsgrad des Polyethylens lässt sich durch Auswahl und Einsatzmenge des Peroxids und weiterhin durch die Parameter des Vemetzungsvorgangs kontrollieren.
Der Vernetzungsgrad des Polyethylens kann gemäß vorliegender Erfindung 5 bis 95 %, bevorzugt 15 bis 90 % und besonders bevorzugt 50 bis 85 % betragen.

Vemetzungsgrade dieser Größenordnung bewirken die hohe thermische Stabilität des Liners. Das "Kriechen" des Materials, wie es von Thermoplasten her bekannt ist, wird dabei unterbunden.

Das Polyethylen, das als Polymermaterial für die Herstellung des Hohlkörpers im Blasverfahren eingesetzt wird, ist ein so genanntes blasfähiges Polyethylen.
Hierzu wird ein entsprechend niederviskoses Polyethylen ausgewählt, der MFI beträgt 0,1 bis 2 g / 10 min bei 190 °C, Belastung 2,16 kg.
Die Dichte eines solchen blasfähigen Polyethylens beträgt 0,93 bis 0,965 g/cm³, bevorzugt 0,948 bis 0,960 g/cm³.

Zum Blasformen und anschließenden Vernetzen sind hierbei besonders so genannte "Phillips"-Typen bevorzugt.
Derartige Phillips-Typen werden mittels Chromkatalysator auf Silikatträger in einem Polymerisationsverfahren hergestellt.

Neben Polyethylen kann auch ein Polyethylen-Copolymer zum Blasen eingesetzt werden, bevorzugt ist dabei ein Comonomer eines Polyolefins auf Basis eines C3- bis C8-Bausteins.

Damit das Polyethylen vernetzt werden kann, wird dem Polyethylen ein Vernetzungsmittel, im vorliegenden Falle ein organisches Peroxid, zugefügt.
Organische Peroxide sind besonders geeignet, Polyethylen zu vernetzen. Erfindungsgemäß werden hierzu organische Peroxide eingesetzt, die eine typische Vernetzungstemperatur von größer/gleich 170 °C aufweisen.

Ganz besonders sind solche bevorzugt, die eine Vernetzungstemperatur von größer/gleich 175 °C aufweisen.

Auf diese Weise wird eine besonders gleichmäßige und hochgradige Vernetzung des Polyethylens erreicht.

Dem Polyethylen können noch weitere Komponenten zugegeben werden.

Diese können beispielsweise Stabilisatoren, wie z.B. phenolische Antioxidantien, oder Verarbeitungshilfsmittel, wie beispielsweise Gleitmittel, oder Vernetzungsverstärker, wie beispielsweise TAC (Triallylcyanurat) oder TAIC (Triallylisocyanurat) oder Trimethylolpropantrimethacrylat oder Divinylbenzol oder Diallylterephthalat oder Triallyltrimellitat oder Triallylphosphat in Konzentrationen von 0,2 bis 2,0 Gewichtsprozent umfassen.

Zur Vernetzung wird der im Blasverfahren unter Verwendung von Polyethylen hergestellte Hohlkörper über einen gewissen Zeitraum einer höheren Temperatur ausgesetzt.

Dies kann beispielsweise bei einer Temperatur von 180 °C bis 280 °C eine Zeitdauer von 10 min umfassen.

Um beim Vernetzungsprozess ein Kollabieren oder eine Formveränderung des im Blasverfahren hergestellten Hohlkörpers zu vermeiden, kann vorgesehen sein, den Hohlkörper bei der Vernetzung mittels anhaltenden Überdruck der Blasluft (Stützluft), die den Hohlkörper in eine die Außenkontur festlegende Form drückt, unter Druck zu setzen.

Bei der Vernetzung des Polyethylens zu PE-Xb, das durch silanische Vernetzung gebildet wird, ist zunächst der so genannte Zweistufenprozess zu betrachten.
Dieser wird auch Sioplas-Prozess genannt.

Hierzu wird das Polyethylen zunächst mit einem Silan unter Zuhilfenahme von Peroxiden gepfropft, dieses gepfropfte Polyethylen wird dann mit einem Katalysatorbatch vermengt und kann so zum Herstellen des Hohlkörpers im Blasformverfahren eingesetzt werden.

Als Katalysatorbatch eignet sich eine zinnorganische Verbindung wie beispielsweise DOTL (Dioctylzinnlaurat).

Weitere Additive können in dieser Zusammensetzung aus gepfropftem Polyethylen und dem Katalysatorbatch noch zusätzlich enthalten sein.

Es ist ebenfalls möglich, die Pfropfung des Silans auf das Polyethylen in einem so genannten Einstufenverfahren vorzunehmen.
Hierzu wird eine Mischung aus Polyethylen, Silan, Peroxid und dem Katalysator einem Extruder zugeführt. Silan, Peroxid und Katalysator bilden eine flüssige Phase, die dem Polyethylen zudosiert werden.

Durch eine so genannte reaktive Extrusion erfolgt hierbei zunächst die Pfropfung des Silans auf das Polyethylen, wobei gleichzeitig eine homogene Vermengung mit dem Katalysator stattfindet.

Die Vernetzung des Polyethylens erfolgt in Gegenwart von Feuchtigkeit bei höherer Temperatur, üblicherweise wird dies in einer Wasserdampfatmosphäre oder in einem Wasserbad von 90 bis 105 °C über einen Zeitraum von 6 bis 15 Stunden je nach Wandstärke des zu blasenden Hohlkörpers bewerkstelligt.

Es ist auch möglich, durch Einwirkung von Strahlungsenergie Polyethylen zu vernetzen, man bezeichnet dies dann als PE-Xc.

Hierzu sind im Wesentlichen alle Polyethylene und dessen Copolymere geeignet.

Durch Einwirkung von Elektronenstrahlen oder Gammastrahlen wird die Vernetzung des Polyethylens erzielt.

Unterstützung bei der Vernetzung können hierbei auch TAC oder TAIC leisten.

Es ist schließlich auch möglich, Polyethylen durch UV-Licht zu vernetzen, indem so genannte Photoinitiatoren, beispielsweise substituierte Benzophenone und ähnliche Substanzen, dem Polyethylen beigegeben werden, die die Vernetzungsreaktion unter der Einwirkung von UV-Licht starten.

Der Speicher weist neben der inneren Schicht der Wandung aus vernetztem Polyethylen eine äußere Schicht der Wandung auf. Die äußere Schicht der Wandung enthält ein Filament oder einen Faden, der beispielsweise aus Kohlenstoff oder aus Aramid oder aus Metall oder aus Bor oder aus Glas oder aus einem silikatischen Material oder aus Aluminiumoxid oder aus einem hochzähen und hochtemperaturbeständigen Polymermaterial oder aus einer Mischung der vorgenannten besteht. Letztere werden auch Hybridgame genannt.

Diese Faserverstärkung der äußeren Schicht der Wandung enthält weiterhin ein Polymermaterial, bevorzugt ein Epoxidharz.

Die Filamente oder Fäden, die in der äußeren Schicht der Wandung enthalten sind, sind um die innere Schicht der Wandung des Hohlkörpers gewickelt und/oder geflochten.
Bei der Umwicklung kann insbesondere vorgesehen sein, dass diese an den Polkappen des Speichers stärker ausgebildet ist, um dort eine besonders hohe Stabilität zu erzielen.

Es kann auch vorteilhaft vorgesehen sein, dass die Umwickelung im Bereich der Einrichtung zur Zu- bzw. Abführung des Fluids oder an anderen Stellen besonders stark ausgebildet ist, um den Speicher an dieser Stelle zu verstärken.

Ebenso kann es vorteilhaft sein, wenn an den Polkappen des Speichers und / oder im Bereich der Einrichtung zur Zu- bzw. Abführung des Fluids oder an anderen Stellen eine besondere Flechttechnik zum Einsatz kommt, die sich von der Flechttechnik, die am zylindrischen Abschnitt des Speichers angewandt wird, unterscheidet. Eine solche besondere Flechttechnik kann der äußeren Schicht der Wandung eine besonders hohe Festigkeit verleihen.

Erfindungsgemäß kann vorgesehen sein, dass die äußere Schicht nicht mit der inneren Schicht verbunden ist. Dies kann Vorteile bei der Langzeitstabilität des Speichers mit sich bringen.

In einer anderen Ausführungsform der Erfindung kann die innere Schicht auch mit der äußeren Schicht verbunden sein. Hierdurch kann ein besonders widerstandsfähiger Speicher geschaffen werden.

Der Speicher weist weiterhin eine Einrichtung zur Zu- bzw. Abführung des Fluids zum Hohlkörper auf. Dieser sogenannte "Boss" stellt eine Öffnung in der Wandung des Speichers dar, der dazu dient, den Speicher mit dem aufzunehmenden Fluid zu füllen oder zu leeren.

Es kann vorteilhaft vorgesehen sein, dass an einem Ort der Oberfläche des Speichers, der in etwa dem "Boss" gegenüber liegt, ein Mittel vorgesehen ist, das die Aufbringung der äußeren Schicht durch Wickeln und / oder Flechten erleichtert.
Das Mittel kann dabei ein Vorsprung der Oberfläche sein oder eine darin vorgesehene Vertiefung, in der beispielsweise eine Achse einbringbar ist, oder eine ähnliche Ausgestaltung umfassen.
Der Speicher lässt sich mit Hilfe des Mittels dann einfacher für den Wickel- bzw. Flechtarbeitsgang handhaben. Das Mittel kann dabei beispielsweise zur Zentrierung des Speichers beim Wickel- und / oder Flechtarbeitsgang dienen. Es kann auch vorteilhaft als Wickelaufnahme genutzt werden, um den Speicher zu bewegen. Schließlich kann das Mittel auch zur Fixierung des Speichers im späteren Einsatz dienen.

Es resultiert so eine bessere Qualität der aufzubringenden äußeren Schicht. Der Speicher ist so widerstandsfähiger herzustellen.

In einer bevorzugten Weiterbildung der Erfindung kann vorgesehen sein, dass eine Sperrschicht zur Reduzierung der Diffusion des Fluids durch die Wandung vorhanden ist.

Hierdurch wird ermöglicht, dass ein Speicher geschaffen wird, der eine besonders niedrige Leckagerate aufweist und insbesondere befähigt ist, das zu speichernde Fluid für einen sehr langen Zeitraum ohne wesentliche Druckverluste aufzunehmen.

Es kann hierzu vorgesehen sein, dass die Sperrschicht auf der Innenoberfläche der inneren Schicht angeordnet ist.

Hierdurch wird zuverlässig eine Diffusion des Fluids durch die Behälterwand vermieden.

Es kann erfindungsgemäß vorgesehen sein, dass die Sperrschicht ein Polymer, wie beispielsweise Ethylenvinylalkohol (EVOH) oder eine Folie oder eine Beschichtung, insbesondere auf Basis eines Silazans, oder eine Kombination der vorstehend genannten ist.
Die Dicke der Sperrschicht kann zwischen 0,1 und 1000 µm, bevorzugt zwischen 0,5 und 1 ,5 µm, betragen.

Durch die Auswahl der Art der Sperrschicht und der jeweiligen Dicke der Sperrschicht kann je nach zu speicherndem Fluid eine besonders günstige Verminderung der Diffusion durch die Wandung erzielt werden.

So ist es beispielsweise möglich, die Diffusion von Wasserstoff durch die Wandung eines solchen Speichers sehr wirksam zu reduzieren, indem eine Schicht des Silazans auf die Innenoberfläche der inneren Schicht aufgebracht ist, wobei die Dicke dieser Sperrschicht 0,5 µm bis 1,5 µm beträgt.

In einer Weiterbildung der vorliegenden Erfindung kann vorgesehen sein, dass der Speicher eine äußere Schutzschicht aufweist, die auf die äußere Schicht der Wandung aufgebracht ist.
Die äußere Schutzschicht kann einen Thermoplasten oder ein Coextrudat oder einen Schrumpfschlauch oder ein Gestrick oder ein Gewirk oder ein Geflecht oder eine Kombination der vorstehend genannten enthalten.

Eine solche äußere Schutzschicht des Speichers ist vorteilhaft, wenn dieser mechanischen Belastungen, wie beispielsweise Stößen oder ähnlichen Krafteinwirkungen, ausgesetzt ist.

Insbesondere verhindert eine solche äußere Schutzschicht, dass Schädigungen beispielsweise der äußeren Wandung auftreten können, die einen Bruch dieser Wandung nach sich ziehen können.

Die äußere Schutzschicht kann auch so ausgestaltet sein, dass sie eine Feuerschutzschicht darstellt, die den Speicher wirkungsvoll vor dem Einwirken von Feuer schützt. Hierzu kann vorteilhaft vorgesehen sein, dass die Feuerschutzschicht sogenannte intumeszierende Materialien enthält, die bei Einwirken einer erhöhten Temperatur Gase oder Wasser abspalten und so den Speicher kühlen bzw. von der Einwirkung heißer Gase abschotten, und / oder durch Ausbilden einer wärmedämmenden Schicht mit niedriger Wärmeleitfähigkeit den Speicher vor der Einwirkung der Hitze eine gewisse Zeit schützen.
Derartige intumeszierende Materialien sind beispielsweise:
Zusammensetzungen, umfassend einen "Kohle"-Spender (z.B. Polyalkohole), einen Säurespender (z.B. Ammoniumpolyphosphat) und ein Treibmittel (z.B. Melamin). Diese bilden dann eine voluminöse, isolierende Schutzschicht durch Verkohlung und gleichzeitiges Aufschäumen.
Andere intumeszierende Materialien umfassen beispielsweise Hydrate, die unter Hitzeinwirkung eine endotherme Wirkung entfalten, indem kühlender Dampf abgegeben wird. Ein Beispiel dafür ist hydratisiertes Alkalimetallsilikat.
Es sind auch gasabspaltende intumeszierende Materialien bekannt, die zum Beispiel Melamin, methylolisiertes Melamin, Hexamethoxymethylmelamin, Melaminmonophosphat, Melaminbiphosphat, Melaminpolyphosphat, Melaminpyrophosphat, Harnstoff, Dimethylharnstoff, Dicyandiamid, Guanylhamstoffphosphat, Glycin oder Aminphosphat umfassen. Die vorangehenden Materialien setzen gasförmigen Stickstoff frei, wenn sie sich unter Einwirkung von Hitze zersetzen. Verbindungen, die Kohlenstoffdioxyd oder Wasserdampf beim Einwirken von Hitze freigeben, könnten ebenfalls venivendet werden.

Die äußere Schutzschicht kann auch dazu dienen, den Speicher durch Aufnahme oder Abbildung von Informationen, die in alphanumerischer Form oder als Strichcode oder als Barcode oder als Farbcode ausgeprägt sind, zu identifizieren.

Schließlich kann die äußere Schutzschicht auch dazu vorgesehen sein, den Speicher ein attraktives Aussehen zu vermitteln.

Es kann in einer Weiterbildung der Erfindung auch vorgesehen sein, dass eine Metallschicht vorhanden ist.
Die Metallschicht kann auf der inneren Schicht angeordnet sein. Die Metallschicht ist dabei vorzugsweise derart ausgeführt, dass sie der Diffusion des Fluids durch die Wandung des Speichers keinen Widerstand entgegensetzt.
Die Metallschicht kann dazu beispielsweise perforiert ausgeführt sein oder nur abschnittsweise angeordnet sein.

Es gelingt dadurch einen besonders widerstandsfähigen Speicher herzustellen.
Die Metallschicht kann in einer anderen Ausführungsform auch auf der Armierungsschicht vorgesehen sein.
Dadurch wird ein Speicher erhalten, der eine besonders feste Wandung aufweist. Schließlich kann die Metallschicht auch auf der äußeren Schicht des Speichers angeordnet sein.
Der Speicher ist dann besonders geschützt gegen äußere Einflüsse wie Stöße oder Krafteinwirkungen.

In einer Weiterbildung der Erfindung kann vorgesehen sein, dass der Speicher Mittel zur Befestigung aufweist, die an der äußeren Wandung befestigt sind. Diese Mittel können Laschen oder Bänder aus Metall oder aus Polymermaterial umfassen. Insbesondere kann der Speicher Mittel zu Befestigung aufweisen, die an der äußeren Schicht der Wandung ausgebildet sind. Es kann auch vorteilhaft vorgesehen sein, wenn Mittel zur Befestigung an der äußeren Schutzschicht ausgebildet sind.
Damit kann der Speicher vorteilhaft beispielsweise in einer Einbausituation in einem Fahrzeug befestigt sein.

In einer Weiterbildung der Erfindung kann vorgesehen sein, dass der Speicher in oder an wenigstens einer Schicht der Wandung ein Sensorelement aufweist. Das Sensorelement kann beispielsweise ein Dehnungsmessstreifen sein, der bei einer Längenänderung über eine Signalverbindung eine Information abgibt.
Damit kann in einem Schädigungsfall, wenn beispielsweise durch eine Fehlfunktion oder Fehlbedienung der Speicher überdehnt oder mechanisch beschädigt wird, eine Anzeige ausgelöst werden, die einen weiteren Betrieb des Speichers verhindert und damit Gefahren abwehrt.

Der Speicher kann auch in einer Weiterbildung der Erfindung ein Identifikationselement enthalten, das den Speicher eindeutig charakterisiert und Daten speichert und bereitstellt. Dies kann Daten zu seiner Entstehungsgeschichte (Lebenslauf während Herstellung und Verwerdung), zu seinem Betrieb und zu anderen Zuständen umfassen.

Das Identifikationselement kann dazu beispielsweise ein Barcode, ein alphanumerischer Code, ein erhaben oder vertieft ausgeführtes Element, ein Hologramm, ein Farbelement oder ein RFID-Element (Radio Frequency Identification Device, Identifizierung mit Hilfe von elektromagnetischen Wellen) oder ein vergleichbares Element sein.
Damit ist es möglich, die Qualitätssicherung des Speichers ebenso wie eine Verfolgung seines Betriebes zu ermöglichen bzw. zu gewährleisten.

Das Verfahren zur Herstellung des erfindungsgemäßen Speichers zeichnet sich dadurch aus, dass die innere Schicht unter der Verwendung von Polyethylen im Blasverfahren hergestellt und nach der Formgebung vernetzt wird.

Es ist hierdurch möglich, einen Liner herzustellen, der hinsichtlich seiner Maße sehr präzise ausgeführt ist und damit die an ihn gestellten hohen Sicherheitsanforderungen erfüllt.

Weiterhin wird der Vernetzungsprozess erst gestartet, wenn das Bauteil bereits seine Form erhalten hat, was Vorteile bei der Güte und Gleichmäßigkeit der Vernetzung nach sich zieht.

Hierbei ist es besonders vorteilhaft, wenn der Liner, der im Blasverfahren hergestellt ist, durch Überdruck der Blasluft (Stützluft) in einer Form stabilisiert wird, wobei die Vernetzung unter erhöhter Temperatur durchgeführt wird.
Der Liner wird dabei durch die Stützluft davor bewahrt, zu kollabieren, während durch den ablaufenden Vernetzungsprozess das Polyethylen in einen festen Zustand überführt wird.

Das Blasverfahren zur Herstellung des Liners kann dabei auch vorteilhaft so gestaltet sein, dass mehrere formgebende Werkzeuge vorgesehen sind, die in einer kontinuierlichen Abfolge den extrudierten Schlauch zu dem gewünschten Hohlkörper aufblasen und nach der Vernetzung und Entnahme des Teils dann unmittelbar wieder für die nächste Bauteilfertigung zur Verfügung stehen.
In Abhängigkeit zu vorgesehenen Anzahl der Werkzeuge kann so eine Fertigung von Linem in hoher Taktfolge realisiert werden. Dies kann beispielsweise in einer Karussellanlage realisiert sein.

Ein erfindungsgemäßes Fluidversorgungssystem mit wenigstens einem Speicher der vorstehend beschriebenen Art findet bevorzugt Anwendung bei einem Kraftfahrzeug oder einer stationären oder mobilen, insbesondere dezentralen Energieerzeugungsvorrichtung oder einem Energiespeichersystem.

Insbesondere dient der Speicher dazu, Wasserstoff unter einem Druck, der bis zu 1500 bar betragen kann, aufzunehmen.

Die vorliegende Erfindung wird anhand der Figuren näher beschrieben.
- Fig. 1: schematische Schnittdarstellung eines Abschnitts eines erfindungsgemäßen Speichers;
- Fig. 2: schematische Schnittdarstellung eines Abschnitts eines zweiten erfindungsgemäßen Speichers.

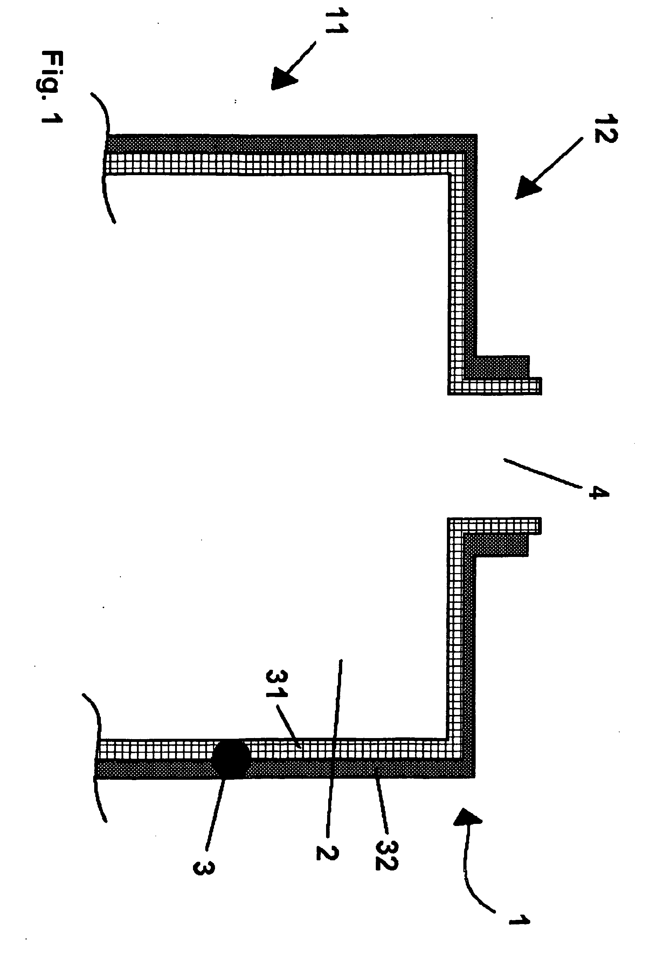

Die Fig. 1 zeigt schematisch einen Abschnitt eines erfindungsgemäßen Speichers in einer Schnittdarstellung.
Der Speicher 1 weist im Wesentlichen einen langgestreckten Aufbau in Form eines zylindrischen Mittelabschnitts 11 auf, der angeformte Polkappen 12 (in der Fig. ist nur eine gezeigt) an den beiden Zylinderenden aufweist.
An einer Polkappe 12 ist die Einrichtung 4 zur Zu- bzw. Abführung des Fluids ausgebildet. Der Hohlkörper 2 des Speichers 1 wird von einer mehrschichtigen Wandung 3 umgeben, die eine innere Schicht 31 aufweist, die vernetztes Polyethylen enthäft.
Die innere Schicht 31 ist einstückig in einem Blasverfahren unter Verwendung von Polyethylen hergestellt und anschließend vernetzt.
Die innere Schicht 31 ist im Wesentlichen überall von gleicher Wandstärke.
Die äußere Schicht 32 der Wandung 3 ist eine Armierungsschicht.
Diese Armierungsschicht ist durch Wickeln und / oder Flechten von Fäden oder Fasern erzeugt, sie ist durch einen Duroplasten verstärkt, im vorliegenden Fall durch ein Epoxidharz.
Die äußere Schicht 32 ist je nach den Erfordernissen der Stabilität an unterschiedlichen Abschnitten unterschiedlich dick. In der Fig. ist dargestellt, dass die äußere Schicht 32 im Bereich der Einrichtung 4 zur Zu- bzw. Abführung des Fluids verdickt ist, da dort Kräfte auftreten, die von der äußeren Schicht 32 aufzunehmen sind.

Die äußere Schicht 32 ist nicht mit der inneren Schicht 31 verbunden.

In der Fig. 2 ist schematisch ein Abschnitt eines zweiten erfindungsgemäßen Speichers in einer Schnittdarstellung gezeigt.
An einer Polkappe 12 ist eine Einrichtung 4 zur Zu- bzw. Abführung des Fluids ausgebildet. In der Fig. ist weiterhin gezeigt, dass an der Innenoberfläche der inneren Schicht 31 eine Diffusionssperrschicht 5 angeordnet ist, die die Diffusion des Fluids aus dem Hohlkörper 2 durch die Wandung 3 wirksam reduziert bzw. verhindert.
Die Diffusionssperrschicht 5 ist im vorliegenden Beispiel eine Schicht aus Silazan.
Auf der äußeren Schicht 32 ist eine Schutzschicht 6 angeordnet, die in Form eines Schrumpfschlauches ausgebildet ist, der den Speicher weitgehend umhüllt.
Im vorliegenden Ausführungsbeispiel ist an der äußeren Schicht 32 anliegend ein Sensorelement 7 etwa im Mittelabschnitt 11 angeordnet, der als Dehnungsmessstreifen ausgebildet ist. Das Sensorelement 7 ist in der Lage, über hier nicht gezeigte Signalleitungen oder alternativ berührungslos ein Signal über den Zustand des Speichers 1 abzugeben, das mittels einer hier nicht gezeigten Auswerteelektronik eine Information bereitstellt, aus der hervorgeht, ob der Speicher 1 beispielsweise beschädigt ist.

### Ausführungsbeispiel:

Blasfähiges Polyethylen, das einen MFI von 0,3 g / 10 min bei 190 °C, Belastung 2,16 kg aufweist, wird im Blasverfahren zu einem Liner verarbeitet.
Die Dichte des blasfähigen Polyethylens beträgt 0,95 g/cm³.
Das blasfähige Polyethylen enthält ein organisches Peroxid, das eine Vernetzungstemperatur von 175 °C aufweist.
Nach der Formgebung wird der geblasene Hohlkörper zur Vernetzung einer Temperatur von 240 °C über einen Zeitraum von 5 min ausgesetzt. Der Hohlkörper wird dazu durch Stützluft in der Form vor einer etwaigen Formänderung bewahrt.
Nach dem Abkühlen des Hohlkörpers wird dieser mit Kohlefasern, die mit einem Epoxidharz getränkt sind, umwickelt, bis eine Schichtdicke von 15 bis 45 mm erreicht ist.
Der derart hergestellte Speicher widersteht einem Druck des in ihm gespeicherten Fluids von 1000 bar. Der Speicher kann mit Wasserstoff gefüllt werden, wobei ein Druck von 700 bar innerhalb von 3 bis 5 min aufbaubar ist.

### Bezugszeichenliste

- 1: Speicher
- 11: Mittelabschnitt
- 12: Polkappe
- 2: Hohlkörper
- 3: Wandung
- 31: innere Schicht
- 32: äußere Schicht
- 4: Einrichtung zur Zu- bzw. Abführung des Fluids
- 5: Diffusionssperrschicht
- 6: Schutzschicht
- 7: Sensorelement

## Patentansprüche

1. Speicher (1) zur Aufnahme eines Fluids, insbesondere von Wasserstoff unter gegenüber der Umgebung erhöhtem Druck von bis zu 1500 bar, der einen Hohlkörper (2) aufweist, welcher von einer Wandung (3) begrenzt ist, wobei die Wandung (3) einen mehrschichtigen Aufbau, und eine Einrichtung (4) zur Zu- bzw. Abführung des Fluids zum Hohlkörper aufweist (2), eine äußere Schicht (32) der Wandung (3) als Armierungsschicht (32) ausgebildet ist und die Armierungsschicht (32) aus Filamenten oder Fäden gewickelt und/oder geflochten ist, **dadurch gekennzeichnet, dass** eine innere Schicht (31) der Wandung (3) vernetztes Polyethylen enthält.

2. Speicher nach Anspruch 1, **dadurch gekennzeichnet, dass** das Polyethylen peroxidisch oder silanisch oder durch Einwirkung von Strahlungsenergie vernetzt ist.

3. Speicher nach einem der Ansprüche 1 oder 2, **dadurch gekennzeichnet, dass** der Vernetzungsgrad des Polyethylens 5 bis 95 %, bevorzugt 15 bis 90 %, und besonders bevorzugt 50 bis 85 % beträgt.

4. Speicher nach einem der vorgenannten Ansprüche, **dadurch gekennzeichnet, dass** die Armierungsschicht (32) ein Filament oder einen Faden aus Kohlenstoff oder aus Aramid oder aus Metall oder aus Bor oder aus Glas oder aus einem silikatischen Material oder aus Aluminiumoxid oder aus einem hochzähen und hochtemperaturbeständigen Polymermaterial oder aus einer Mischung der vorgenannten enthält.

5. Speicher nach einem der vorstehenden Ansprüche, **dadurch gekennzeichnet, dass** die äußere Schicht (32) ein Polymermaterial, bevorzugt ein Epoxidharz, enthält.

6. Speicher nach einem der vorangehenden Ansprüche, **dadurch gekennzeichnet, dass** eine Sperrschicht (5) zur Reduzierung der Diffusion des Fluids durch die Wandung (3) vorhanden ist.

7. Speicher nach Anspruch 6, **dadurch gekennzeichnet, dass** die Sperrschicht (5) auf der Innenoberfläche der inneren Schicht (31) vorgesehen ist

8. Speicher nach Anspruch 7, **dadurch gekennzeichnet, dass** die Sperrschicht (5) ein Polymer, wie beispielsweise Ethylenvinylalkohol (EVOH), oder eine Folie oder eine Beschichtung, insbesondere auf Basis eines Silazans, oder eine Kombination der vorstehend genannten ist.

9. Speicher nach einem der Anspruche 6 bis 8, **dadurch gekennzeichnet, dass** die Dicke der Sperrschicht (5) wischen 0,1 und 1000 µm beträgt.

10. Speicher nach einem der vorangehenden Ansprüche, **dadurch gekennzeichnet, dass** eine äußere Schutzschicht (6) vorgesehen ist, die auf der äußeren Schicht (32) der Wandung (3) aufgebracht ist.

11. Speicher nach Anspruch 10, **dadurch gekennzeichnet, dass** die äußere Schutzschicht (6) einen Thermoplast oder en Coextrudat oder einen Schrumpfschlauch oder ein Gestnck oder em Gewirk oder ein Geflecht oder eine Kombination der vorstehend genannten enthält.

12. Verfahren zur Herstellung eines Speichers nach einem der vorangehenden Anspruche, **dadurch gekennzeichnet, dass** die innere Schicht (31) unter Verwendung von Polyethylen im Blasverfahren hergestellt und nach der Formgebung vernetzt wird

13. Fluidversorgungssystem mit wenigstens einem Speicher nach einem der Anspruche 1 bis 11, in der Anwendung bei einem Kraftfahrzeug oder einer stationären oder mobilen, insbesondere dezentralen Energieerzeugungsvorrichtung oder einem Energiespeichersystem

## Claims

1. Reservoir (1) for receiving a fluid, in particular hydrogen under a pressure that is elevated relative to the surroundings of up to 1500 bar, which reservoir has a hollow body (2) which is delimited by a wall (3), wherein the wall (3) has a multilayered structure, and a device (4) for feeding the fluid to and carrying the fluid away from the hollow body (2), an outer layer (32) of the wall (3) is in the form of a reinforcement layer (32) and the reinforcement layer (32) is wound and/or braided from filaments or threads, **characterized in that** an inner layer (31) of the wall (3) contains cross-linked polyethylene.

2. Reservoir according to Claim 1, **characterized in that** the polyethylene is cross-linked by peroxide cross-linking or by silane cross-linking or by the action of radiation energy.

3. Reservoir according to either of Claims 1 and 2, **characterized in that** the degree of cross-linking of the polyethylene is 5 to 95%, preferably 15 to 90% and particularly preferably 50 to 85%.

4. Reservoir according to one of the preceding claims, **characterized in that** the reinforcement layer (32) contains a filament or a thread made of carbon or of aramid or of metal or of boron or of glass or of a silicate material or of aluminium oxide or of a polymer material having a high toughness and a high temperature resistance or of a mixture of the aforementioned.

5. Reservoir according to one of the preceding claims, **characterized in that** the outer layer (32) contains a polymer material, preferably an epoxy resin.

6. Reservoir according to one of the preceding claims, **characterized in that** a barrier layer (5) is present for reducing the diffusion of the fluid through the wall (3).

7. Reservoir according to Claim 6, **characterized in that** the barrier layer (5) is provided on the inner surface of the inner layer (31).

8. Reservoir according to Claim 7, **characterized in that** the barrier layer (5) is a polymer, for example ethylene vinyl alcohol (EVOH), or a film or a coating, in particular based on a silazane, or a combination of the aforementioned.

9. Reservoir according to one of Claims 6 to 8, **characterized in that** the thickness of the barrier layer (5) is between 0.1 and 1000 µm.

10. Reservoir according to one of the preceding claims, **characterized in that** provision is made of an outer protective layer (6), which is applied to the outer layer (32) of the wall (3).

11. Reservoir according to Claim 10, **characterized in that** the outer protective layer (6) contains a thermoplastic or a coextrudate or a shrink tubing or a knitted fabric or an interlaced fabric or a meshwork or a combination of the aforementioned.

12. Process for producing a reservoir according to one of the preceding claims, **characterized in that** the inner layer (31) is produced in a blow moulding process using polyethylene and is cross-linked after moulding.

13. Fluid supply system having at least one reservoir according to one of Claims 1 to 11, used in a motor vehicle or a stationary or mobile, in particular decentralized energy generating apparatus or an energy storage system.

## Revendications

1. Réservoir (1) destiné à recevoir un fluide, en particulier de l'hydrogène sous une pression accrue par rapport à la pression atmosphérique jusqu'à 1500 bars, qui présente un corps creux (2), qui est délimité par une paroi (3), dans lequel la paroi (3) présente une structure multicouche, et un dispositif (4) pour amener ou évacuer le fluide au/du corps creux (2), une couche extérieure (32) de la paroi (3) est réalisée comme couche d'armature (32) et la couche d'armature (32) est enroulée et/ou tissée à partir de filaments ou de fils, **caractérisé en ce qu'**une couche intérieure (31) de la paroi (3) contient du polyéthylène réticulé.

2. Réservoir selon la revendication 1, **caractérisé en ce que** le polyéthylène est réticulé au peroxyde ou au silane ou par l'action d'une énergie de rayonnement.

3. Réservoir selon l'une quelconque des revendications 1 ou 2, **caractérisé en ce que** le degré de réticulation du polyéthylène vaut 5 à 95 %, de préférence 15 à 90 %, et particulièrement 50 à 85 %.

4. Réservoir selon l'une quelconque des revendications précédentes, **caractérisé en ce que** la couche d'armature (32) contient un filament ou un fil en carbone ou en aramide ou en métal ou en bore ou en verre ou en un matériau silicaté ou en oxyde d'aluminium ou en un matériau polymère très tenace et résistant aux hautes températures ou en un mélange de ceux-ci.

5. Réservoir selon l'une quelconque des revendications précédentes, **caractérisé en ce que** la couche extérieure (32) contient un matériau polymère, de préférence une résine époxyde.

6. Réservoir selon l'une quelconque des revendications précédentes, **caractérisé en ce qu'**il se trouve une couche de barrière (5) destinée à réduire la diffusion du fluide à travers la paroi (3).

7. Réservoir selon la revendication 6, **caractérisé en ce que** la couche de barrière (5) est prévue sur la surface intérieure de la couche intérieure (31).

8. Réservoir selon la revendication 7, **caractérisé en ce que** la couche de barrière (5) est un polymère, comme par exemple l'éthylène-alcool vinylique (EVOH), ou une feuille ou un revêtement, en particulier à base d'un silazane, ou une combinaison de ceux-ci.

9. Réservoir selon l'une quelconque des revendications 6 à 8, **caractérisé en ce que** l'épaisseur de la couche de barrière (5) est comprise entre 0,1 et 1000 µm.

10. Réservoir selon l'une quelconque des revendications précédentes, **caractérisé en ce qu'**il est prévu une couche de protection extérieure (6), qui est déposée sur la couche extérieure (32) de la paroi (3).

11. Réservoir selon la revendication 10, **caractérisé en ce que** la couche de protection extérieure (6) content un thermoplastique ou un co-extrudat ou une gaine thermorétractable ou un tricot ou un tissu à mailles ou un treillis ou une combinaison de ceux-ci.

12. Procédé de fabrication d'un réservoir selon l'une quelconque des revendications précédentes, **caractérisé en ce que** l'on fabrique la couche intérieure (31) en utilisant du polyéthylène par un procédé de soufflage et on assure sa réticulation après le formage.

13. Système d'alimentation en fluide avec au moins un réservoir selon l'une quelconque des revendications 1 à 11, dans son application dans un véhicule ou dans un dispositif de production d'énergie stationnaire ou mobile, en particulier décentralisé, ou dans un système d'accumulation d'énergie.
